# DEMANDE DE BREVET EUROPEEN

(11) **EP 3 023 948 A1**
(43) Date de publication de la demande: **25.05.2016**
(21) Numéro de dépôt: 15189942.4
(22) Date de dépôt: 15.10.2015
(51) Int. Cl.: G07F 19/00, G06Q 20/20, G06Q 20/40

(54) **PROCÉDÉ DE DÉTECTION D'UN RISQUE DE SUBSTITUTION D'UN TERMINAL, DISPOSITIF, PROGRAMME ET SUPPORT D'ENREGISTREMENT CORRESPONDANTS**

(30) Priorité: 21.11.2014 FR 1461282
(71) Demandeur: Ingenico Group, 75015 Paris (FR)
(72) Inventeur: SIRAI, Youssef, 77170 BRIE-COMTE-ROBERT (FR)
(74) Mandataire: Vidon Brevets & Stratégie

(57) **Abrégé**

L'invention concerne un procédé de détection d'un risque de substitution d'un terminal de paiement électronique authentique par un terminal de paiement électronique frauduleux, comprenant une étape (10) de génération d'une alerte lorsqu'au moins une caractéristique de fonctionnement (*CFi*) associée audit terminal de paiement électronique authentique est inférieure à au moins un seuil prédéterminé (*Si*).

## Description

### 1. Domaine de l'invention

L'invention se rapporte au domaine des terminaux de paiement. La technique se rapporte plus particulièrement à la sécurisation des terminaux de paiement.

### 2. Art Antérieur

Les terminaux de paiement font l'objet de nombreuses tentatives d'attaques. En effet, de par la nature des informations qu'il contient et de par la sensibilité des données qu'il traite, le terminal de paiement est un objet qui possède une grande valeur pour des personnes malveillantes.

Un certain type de fraude tend à prendre de l'ampleur : il s'agit de substituer un terminal de paiement authentique/valide par un terminal de paiement frauduleux/contrefait. Le terminal de paiement authentique est subtilisé dans un commerce et immédiatement remplacé par un terminal de paiement qui présente une apparence de validité, mais qui en réalité a été modifié, par exemple pour lire et copier les données des cartes bancaires des clients, de façon à pouvoir effectuer des transactions frauduleuses avec des données clients préalablement lues. Le commerçant non avisé peut aisément être dupé et ne pas se rendre compte de la substitution avant plusieurs jours.

Une manière pour résoudre ce problème de remplacement peut consister en l'application d'un marquage sur le terminal. Un tel marquage permet au commerçant de se rendre compte de la substitution de son terminal. Cette technique est efficace à partir du moment où le fraudeur n'est pas lui-même en mesure de reproduire ce marquage. Cette technique est donc limitée par la capacité du fraudeur à reproduire le marquage. Or, pour qu'un marquage soit efficace, il doit être visible. S'il est visible, ce marquage est également visible pour le fraudeur qui peut donc aisément le reproduire. Ainsi, cette solution simple d'application d'un marquage n'est en réalité pas efficace.

Une autre manière de résoudre ce problème est de ne disposer que de terminaux de paiement filaires, c'est à dire de terminaux de paiement connectés physiquement à une caisse enregistreuse par exemple. Cette solution est certes efficace, mais en réalité peu adaptée à la pratique actuelle qui consiste à offrir une plus grande mobilité aux commerçants et aux clients. Néanmoins, cette technique est utilisée par exemple dans les grandes surfaces ou dans certains types de magasins.

Les techniques existantes sont néanmoins limitées lorsqu'il s'agit de prévenir ou d'empêcher la réalisation de la fraude dans des commerces de moindre envergure. Il existe donc un besoin de fournir une technique qui permette au commerçant de détecter une fraude par substitution de terminal et qui permette de se prémunir des effets négatifs d'une telle fraude.

### 3. Résumé de l'invention

L'invention propose un procédé de détection d'un risque de substitution d'un terminal de paiement électronique authentique par un terminal de paiement électronique frauduleux, comprenant une étape de génération d'une alerte lorsqu'au moins une caractéristique de fonctionnement *(CFi)* associée au terminal de paiement électronique authentique est inférieure à au moins un seuil prédéterminé (Si).

Ainsi, l'invention propose une solution nouvelle et inventive de lutte contre la substitution de terminaux de paiement électronique permettant de détecter rapidement si un terminal de paiement électronique authentique donné a été substitué par un terminal de paiement électronique frauduleux, en détectant qu'une caractéristique de fonctionnement de ce terminal de paiement électronique est suspecte car inférieure à un seuil « attendu » pour cette caractéristique de fonctionnement.

En effet, certaines caractéristiques de fonctionnement d'un terminal de paiement électronique comme par exemple un nombre moyen de transactions effectuées sur une période temporelle donnée, ou encore un montant cumulé de transactions effectuées sur une période temporelle donnée, permettent de détecter une utilisation non conforme à ce qui est classiquement observé pour ce même terminal de paiement électronique.

Dans ce cas, si une ou plusieurs caractéristiques de fonctionnement d'un terminal de paiement électronique donné est(sont) considérée(s) comme suspecte(s), une alerte est générée, de façon à informer d'une éventuelle (tentative de) fraude sur le terminal de paiement électronique en question.

Selon un aspect particulier de l'invention, le procédé comprend les étapes suivantes :
- obtention d'au moins une information en provenance du terminal de paiement électronique authentique permettant de déterminer au moins la caractéristique de fonctionnement *(CFi)* associée au terminal de paiement électronique authentique ;
- comparaison de la caractéristique de fonctionnement *(CFi)* préalablement déterminée avec le seuil prédéterminé (Si).

Ainsi, selon ce mode de réalisation de l'invention, plusieurs informations sont collectées, en provenance du terminal de paiement électronique, pour déterminer une caractéristique de fonctionnement permettant de générer ou non une alerte, en fonction de sa comparaison avec un seuil prédéterminé.

En effet, selon les différents modes de réalisation de l'invention, la génération d'une alerte dépend de l'observation, sur une période temporelle donnée, de certains paramètres du terminal de paiement électronique, et non d'un état de fonctionnement du terminal de paiement électronique à un instant donné.

Par exemple, la caractéristique de fonctionnement *(CFi)* associée au terminal de paiement électronique authentique appartient au groupe comprenant :
- un nombre de transactions pendant une période temporelle prédéterminée ;
- un montant cumulé de transactions pendant une période temporelle prédéterminée ;
- une combinaison des caractéristiques précédentes.

Ainsi, par exemple, une caractéristique de fonctionnement pouvant être utilisée pour détecter une (tentative de) fraude sur un terminal de paiement électronique correspond à un nombre de transactions effectuées par le terminal de paiement électronique, sur une période temporelle donnée. En effet, il est possible d'établir des statistiques, ou métriques, d'utilisation d'un terminal de paiement électronique en observant, sur une durée suffisamment longue, le nombre de transactions effectuées, et à quel moment d'une journée, ou d'une semaine ou d'un mois ... afin de déterminer un seuil en-deçà duquel un fonctionnement suspect du terminal de paiement électronique peut être détecté. En particulier, lorsqu'un terminal de paiement électronique authentique est remplacé par un terminal de paiement électronique frauduleux, le terminal de paiement électronique authentique n'effectue plus de transaction, et, sur une période donnée, le nombre de transactions associées à ce terminal de paiement électronique peut être inférieur au seuil prédéterminé et engendrer la génération d'une alerte.

Dans ce cas, à chaque transaction effectuée par le terminal, une information correspondant à la transaction est obtenue et permet d'incrémenter un nombre courant de transactions. A la fin de la période temporelle déterminée, le nombre courant de transactions effectuées est alors comparé au seuil correspondant prédéterminé, c'est-à-dire le nombre minimum de transactions attendu pour la période donnée.

Selon un autre exemple, une caractéristique de fonctionnement pouvant être utilisée pour détecter une (tentative de) fraude sur un terminal de paiement électronique correspond à un montant cumulé de transactions effectuées par le terminal de paiement électronique, sur une période temporelle donnée. En effet, de même que des statistiques sur un nombre moyen de transactions effectuées par un terminal de paiement électronique peuvent être établies, des statistiques sur un montant cumulé de transactions, sur une période donnée, peuvent également être établies et servir de moyens de détection d'un risque de (tentative de) fraude. En particulier, lorsqu'un terminal de paiement électronique authentique est remplacé par un terminal de paiement électronique frauduleux, le terminal de paiement électronique authentique n'effectue plus de transaction, et, sur une période donnée, le montant cumulé des transactions associées à ce terminal de paiement électronique peut être inférieur au seuil prédéterminé et engendrer la génération d'une alerte.

Dans ce cas, à chaque transaction effectuée par le terminal, une information correspondant au montant de la transaction est obtenu et permet d'incrémenter un montant cumulé courant de transactions. A la fin de la période temporelle déterminée, le montant cumulé courant de transactions effectuées est alors comparé au seuil correspondant prédéterminé, c'est-à-dire le montant cumulé minimum de transactions attendu pour la période donnée.

Bien entendu, ces deux caractéristiques de fonctionnement peuvent être combinées pour détecter une (tentative de) fraude et ne générer une alerte par exemple uniquement lorsque les deux caractéristiques observées sont simultanément inférieures à leurs seuils respectifs. Une telle combinaison permet de limiter les alertes intempestives liées à des conditions d'utilisation exceptionnelles du terminal de paiement électronique qui influeraient sur l'une ou l'autre des caractéristiques de fonctionnement, sans qu'il n'y ait eu de substitution de terminal.

Par ailleurs, il est nécessaire que la ou les caractéristiques de fonctionnement utilisées soient observées sur une période temporelle donnée, représentative d'un fonctionnement normal, ou nominal, du terminal de paiement électronique.

Ainsi, les seuils sont déterminés sur des périodes temporelles données, définies comme étant les plus représentatives de ce fonctionnement nominal du terminal de paiement électronique, et les alertes ne sont déclenchées que lorsque les caractéristiques de fonctionnement sont jugées suspectes sur une telle période temporelle.

Par exemple, une telle période temporelle correspond à un jour ouvré entier, pour un terminal de paiement électronique situé dans un point de vente. Selon un autre exemple, une telle période temporelle correspond à une plage horaire de quelques heures, significatives de l'utilisation du terminal, par exemple de 12h à 14h pour un restaurant.

Selon un mode de réalisation particulier de l'invention, l'étape de génération d'une alerte tient compte d'au moins une donnée fournie par au moins un utilisateur du terminal de paiement électronique authentique.

Ainsi, selon ce mode de réalisation de l'invention, la génération d'une alerte tient compte de données fournies par un utilisateur du terminal de paiement électronique, par exemple le commerçant.

Par exemple, une telle donnée fournie par le commerçant peut permettre de déterminer les différents seuils correspondant aux différentes caractéristiques de fonctionnement potentiellement utilisées pour générer une alerte, ou peut intervenir dans la détermination proprement dite de cette/ces caractéristique(s) de fonctionnement.

Ainsi, le commerçant peut en quelque sorte paramétrer la génération d'alerte, par exemple notamment lorsque son utilisation du terminal change, pour quelque raison que ce soit.

Par exemple, la donnée est fournie par l'utilisateur via au moins une interface utilisateur.

Ainsi, selon ce mode de réalisation de l'invention, l'utilisateur du terminal de paiement électronique, par exemple le commerçant, peut configurer/paramétrer la génération d'alerte via une interface utilisateur lui permettant de modifier certaines données de manière rapide et ergonomique. Il peut s'agir par exemple d'une interface Web permettant de prendre en compte instantanément les changements apportés par l'utilisateur.

Selon un aspect particulier de l'invention, la donnée fournie par l'utilisateur appartient au groupe comprenant :
- au moins une période temporelle ;
- un nombre minimum de transactions effectuées en relation avec au moins une période temporelle ;
- un montant cumulé minimum de transactions effectuées en relation avec au moins une période temporelle ;
- une combinaison des données précédentes.

Ainsi, selon ce mode de réalisation de l'invention, l'utilisateur du terminal de paiement électronique peut saisir une ou plusieurs plages horaires, dans une journée ou une semaine, permettant ainsi de définir des périodes temporelles spécifiquement liées à l'utilisation du terminal.

Par exemple, le commerçant saisit ses horaires d'ouverture (en fonction du jour de la semaine par exemple, pour tenir compte d'horaires particuliers), ainsi que les périodes de transactions « offline », c'est-à-dire les périodes où les transactions effectuées dans une journée sont effectivement transmises à l'organisme bancaire en charge de leur traitement.

Le commerçant peut également indiquer ses jours de fermeture, prévue ou exceptionnelle, de façon à éviter des alertes intempestives dues à des changements d'utilisation du terminal.

Le commerçant peut également saisir lui-même des données concernant le nombre de transactions minimum attendu sur une plage horaire prédéfinie, permettant ainsi de fixer le seuil en-deçà duquel une alerte peut être générée.

Le montant cumulé minimum des transactions attendu sur une plage horaire prédéfinie peut également être fourni par le commerçant lui-même, permettant ainsi de fixer le seuil en-deçà duquel une alerte peut être générée.

Bien entendu, le commerçant peut fournir une ou plusieurs de ces données, lorsqu'il est en leur possession, afin de paramétrer plus ou moins précisément la génération d'une alerte.

Selon une caractéristique particulière de l'invention, le procédé comprend en outre une étape d'émission de l'alerte générée, à destination d'au moins une entité préalablement associée à au moins un utilisateur du terminal de paiement électronique authentique.

Ainsi, selon ce mode de réalisation de l'invention, l'alerte générée est transmise à une entité préalablement associée à un utilisateur du terminal de paiement électronique, par exemple le commerçant. Il peut s'agir du terminal mobile du commerçant, vers lequel une alerte peut être émise sous la forme d'un SMS ou d'un email, ou encore de son téléphone fixe, vers lequel une alerte issue d'une messagerie vocale automatique peut être émise.

Selon un aspect particulier de l'invention, la caractéristique de fonctionnement est associée au terminal de paiement électronique authentique via un identifiant unique du terminal de paiement électronique authentique.

Ainsi, selon ce mode de réalisation de l'invention, le terminal de paiement électronique authentique est identifié de manière unique pour permettre de l'associer avec une caractéristique de fonctionnement propre, de façon à sécuriser la génération d'alertes.

Par exemple, les informations obtenues en provenance du terminal de paiement électronique pour déterminer la/les caractéristique(s) de fonctionnement portent l'identifiant unique du terminal de paiement électronique correspondant, de manière à pouvoir associer la caractéristique fonctionnelle au terminal de paiement électronique donné.

Par exemple, cet identifiant unique est composé d'au moins deux informations permettant d'identifier le terminal, comme par exemple le couple *(numTPV, numComm)* où *numTPV est* un numéro de série du terminal de paiement électronique et *numComm* un numéro commerçant permettant de l'identifier de manière unique.

Ainsi, chaque information de transaction obtenue pour un terminal de paiement électronique est associé à l'identifiant unique du terminal de paiement électronique, de façon à ce que la caractéristique de fonctionnement déterminée à partir des informations de transaction soit associée à ce terminal de paiement électronique.

De cette manière, lorsque plusieurs terminaux de paiement électronique bénéficient du procédé de détection d'un risque de substitution selon les différents modes de réalisation de l'invention, chacun est géré de manière indépendante grâce à son identifiant.

Selon un mode de réalisation particulier de l'invention, le procédé est mis en oeuvre par une entité distante.

Ainsi, selon ce mode de réalisation de l'invention, le procédé de détection d'un risque de substitution est mis en oeuvre par une entité distante, correspondant par exemple à un serveur d'au moins un organisme gestionnaire dudit terminal de paiement électronique authentique pour ledit commerçant, c'est-à-dire apte à recevoir des informations de transaction du terminal de paiement électronique.

En particulier, ce serveur distant est apte à obtenir des informations de transactions, pour chaque transaction effectuées par un terminal de paiement électronique, y compris le montant de la transaction. Il peut donc ensuite déterminer une ou plusieurs caractéristiques de fonctionnement d'un terminal de paiement électronique, par exemple en incrémentant le nombre courant de transactions à chaque transaction effectuée, ou en incrémentant le montant cumulé courant de transactions à chaque transaction effectuée.

Par exemple, le serveur distant correspond au serveur de l'organisme bancaire du commerçant, ou bien au serveur d'une entité distante ayant en charge uniquement la gestion de la sécurité et du suivi de l'activité d'une pluralité de terminaux de paiement électronique.

Cette entité distante peut également correspondre à un ordinateur central du point de vente où est utilisé le terminal de paiement électronique authentique.

Selon un aspect particulier de l'invention, le procédé comprend, préalablement à l'étape de génération de l'alerte, une étape de comparaison de la caractéristique de fonctionnement (CFi) associée au terminal de paiement électronique authentique avec une caractéristique de fonctionnement géographiquement associée au point de vente auquel est rattaché le terminal de paiement électronique authentique.

Ainsi, selon ce mode de réalisation de l'invention, avant de générer une alerte, un recoupement est mis en oeuvre avec une autre technique de détection d'un risque de substitution d'un terminal de paiement électronique authentique par un terminal de paiement électronique frauduleux basée sur une association géographique d'une transaction avec un point de vente donné. Cette technique est notamment décrite dans la demande de brevet français FR1458749 du présent Demandeur et consiste à détecter un nombre trop élevé de transactions effectuées dans un point de vente donné.

Par exemple, si, lorsque le procédé de détection objet de la présente invention permet de détecter un nombre de transactions effectuées par un terminal de paiement électronique authentique inférieur au seuil prédéterminé sur une période donnée, il est possible de valider l'existence d'une fraude si le nombre de transactions associées géographiquement au point de vente auquel est normalement rattaché le terminal de paiement électronique en question est lui très supérieur au même seuil. En effet, dans ce cas, le terminal de paiement électronique authentique n'est plus utilisé alors qu'un terminal de paiement électronique frauduleux est utilisé, dans le point de vente donné.

Ce recoupement de deux détections basées sur deux critères de détection distincts permet de minimiser les « fausses » alertes et donc de limiter, pour le commerçant, les désagréments liés à un fonctionnement exceptionnellement différent de la normale mais non dû à une fraude.

Selon un autre aspect, l'invention concerne un dispositif de détection d'un risque de substitution d'un terminal de paiement électronique authentique par un terminal de paiement électronique frauduleux, comprenant des moyens de génération d'une alerte lorsqu'au moins une caractéristique de fonctionnement *(CFi)* associée au terminal de paiement électronique authentique est inférieure à au moins un seuil prédéterminé (Si). Un tel dispositif est par exemple un serveur distant ou encore une entité d'un point de vente.

L'invention concerne également un programme d'ordinateur téléchargeable depuis un réseau de communication et/ou stocké sur un support lisible par ordinateur et/ou exécutable par un microprocesseur, comprenant des instructions de code de programme pour l'exécution des étapes du procédé de détection d'un risque de substitution tel que décrit précédemment, lorsque le programme est exécuté sur un ordinateur.

Enfin, l'invention concerne également un support d'enregistrement lisible par un ordinateur sur lequel est enregistré un programme d'ordinateur comprenant un jeu d'instructions exécutables par un ordinateur ou un processeur pour mettre en oeuvre le procédé de détection d'un risque de substitution tel que décrit précédemment.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée, selon un mode de réalisation particulier;
- la figure 2 présente un système dans laquelle la technique proposée peut être mise en oeuvre, selon un mode de réalisation particulier;
- les figures 3 et 4 présentent deux exemples d'un dispositif de détection selon la technique proposée, selon un mode de réalisation particulier.

### 5. Description

### 5.1. Principe général

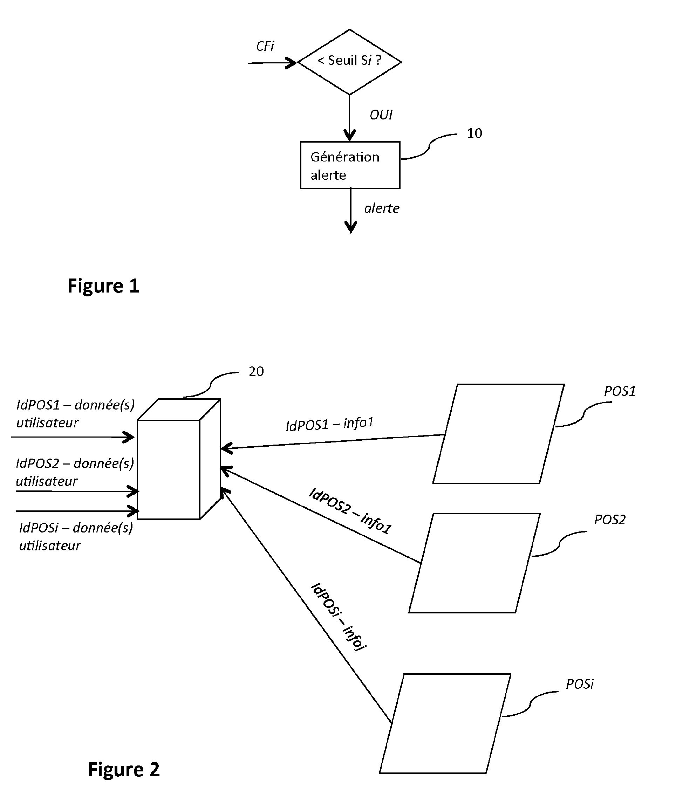

Le principe général de l'invention, décrit en relation avec les figures 1 et 2, consiste à détecter qu'une caractéristique de fonctionnement *CFi* est suspecte, pour un terminal de paiement électronique authentique donné, afin de générer une alerte de risque de substitution du terminal de paiement électronique donné par un terminal de paiement électronique frauduleux.

Par exemple, la caractéristique de fonctionnement *(CFi, CFj* ...) correspond à un nombre de transactions ou un montant cumulé de transactions attendu, pour une période temporelle donnée, pour un terminal de paiement électronique donné, et est considérée comme suspecte dès lors qu'elle ne correspond pas aux valeurs attendues (par exemple lorsqu'elle est inférieure à un seuil prédéterminé *Si*).

Cette situation peut en particulier intervenir lorsque ce terminal de paiement électronique authentique a été remplacé par un terminal de paiement électronique frauduleux. En effet, dans le cas d'une substitution, par exemple dans un point de vente ou un restaurant, du terminal de paiement électronique authentique par un terminal de paiement électronique frauduleux, le terminal de paiement électronique authentique n'effectue plus de transactions, car c'est le terminal de paiement électronique frauduleux qui est utilisé.

Ainsi, si l'on détecte que le nombre de transactions *(CFi)* associées à un terminal de paiement électronique est inférieur à un seuil prédéterminé noté Si, sur une période temporelle donnée, cela peut être la conséquence d'une substitution du terminal de paiement électronique par un terminal de paiement électronique frauduleux.

De même, si les montants cumulés des transactions *(CFj)* associées à un terminal de paiement électronique sont inférieurs à un seuil prédéterminé Sj, sur une période temporelle donnée, cela peut également être dû à une substitution du terminal de paiement électronique par un terminal de paiement électronique frauduleux.

Dans ces différentes situations, le procédé de détection selon les différents modes de réalisation de l'invention met en oeuvre une étape 10 de génération d'une alerte de risque de substitution du terminal de paiement électronique authentique par un terminal de paiement électronique frauduleux.

Pour ce faire, la caractéristique de fonctionnement utilisée pour détecter une éventuelle fraude par substitution de terminal doit être mise en surveillance, sur une période temporelle donnée, par exemple par une entité autorisée à analyser certaines données (comme par exemple chaque transaction effectuée, ainsi que le montant de chaque transaction effectuée) en provenance du terminal de paiement électronique.

Par exemple, cette entité correspond à un serveur distant 20, comme illustré sur la figure 2, apte à recevoir des informations d'une pluralité de terminaux de paiement électronique *POS1, POS2 ... POSi.*

Ce serveur distant 20 peut correspondre à un serveur d'un organisme bancaire en charge de la gestion des transactions de la pluralité de terminaux de paiement électronique, ou encore un serveur distant en charge de la gestion de la sécurité de cette pluralité de terminaux de paiement électronique, en repérant les fraudes et en effectuant un suivi de l'activité des terminaux de paiement électronique.

Cette entité 20 peut également correspondre à une entité située au même endroit que le terminal de paiement électronique authentique, comme par exemple l'ordinateur central d'un commerçant.

Par ailleurs, et comme illustré en figure 2, les données reçues de chaque terminal de paiement électronique dont l'entité 20 a en charge la sécurité sont identifiées de manière unique grâce à un identifiant unique du terminal de paiement électronique. Ainsi, l'entité 20 peut mettre en oeuvre le procédé de détection d'un risque de substitution en parallèle pour une pluralité de terminaux de paiement électronique, en s'assurant que chaque caractéristique de fonctionnement déterminée est associée de manière unique à un terminal de paiement électronique particulier.

Ainsi, les données utilisateur fournies par exemple par le commerçant utilisant le terminal de paiement électronique authentique sont associées à l'identifiant du terminal de paiement électronique *(IdPOS1, IdPOS2* ... *IdPOSi),* ainsi que les informations provenant des terminaux de paiement électronique *(IdPOS1 - info1, IdPOS2 - info1 ... IdPOSi - infoj*).

Cet identifiant unique de terminal de paiement électronique correspond à un numéro de série ou est composé d'au moins deux informations permettant d'identifier le terminal, comme par exemple le couple *(numTPV, numComm)* où *numTPV est* un numéro de série du terminal de paiement électronique et *numComm* un numéro commerçant permettant de l'identifier de manière unique.

On décrit maintenant plus en détails deux modes de réalisation de l'invention, en relation avec la figure 2, où l'entité 20 correspond à un serveur distant.

### 5.2. Description d'un premier mode de réalisation

On considère, dans un premier mode de réalisation, que la caractéristique de fonctionnement du terminal de paiement électronique utilisée pour détecter une éventuelle fraude par substitution de terminal correspond au nombre de transactions effectuées sur une période temporelle donnée.

### 5.2.1 Caractéristique de fonctionnement

Par exemple, cette caractéristique de fonctionnement est notée *CF1,* et est déterminée grâce aux informations *info1* transmises par le terminal de paiement électronique au serveur 20.

C'est par exemple le cas des terminaux de paiement électronique *POS1* et *POS2,* comme illustré en figure 2.

Ainsi, à chaque transaction effectuée par le terminal de paiement électronique *POS1,* le serveur 20 obtient une information *info1* correspondant à cette transaction. Cette information *info1* permet en particulier au serveur 20 d'incrémenter le nombre courant de transactions déjà effectuées par le terminal de paiement électronique *POS1,* au cours de la période temporelle courante.

### 5.2.2 Période temporelle

On considère par exemple que cette période temporelle s'étend de l'heure d'ouverture du commerce auquel est rattaché le terminal de paiement électronique *POS1* jusqu'à l'heure de fin des éventuelles transactions « offline ». En effet, ce type de transactions « offline » n'est pas pris en considération au moment de leur mise en oeuvre, mais uniquement lorsqu'une communication avec le serveur en charge du traitement des transactions est initiée, le plus souvent en dehors des horaires d'ouverture du commerce.

Cette période temporelle peut être directement fournie par le commerçant, au serveur 20, sous la forme de données utilisateur associées à un identifiant unique du terminal de paiement électronique donné *(IdPOSi - donnée(s) utilisateur = plage horaire)* ou calculée par le serveur 20 à partir d'une ou plusieurs données utilisateur associées à un identifiant unique du terminal de paiement électronique donné *(IdPOSi - donnée(s) utilisateur = heures d'ouvertures, jours d'ouverture ...)*.

Ainsi, la période temporelle utilisée pour la mise en oeuvre du procédé de détection d'un risque de fraude peut être déterminée de diverses manières, selon les données fournies par l'utilisateur/commerçant.

### 5.2.3 Comparaison avec le seuil

Une fois la période temporelle donné écoulée, le serveur peut donc déterminer la valeur finale de la caractéristique de fonctionnement *CF1* utilisée, en l'occurrence ici le nombre de transactions effectuées, afin de la comparer avec un seuil prédéterminé, noté par exemple *S1* et qui peut également faire partie des données utilisateur fournies au serveur 20.

Par exemple, ce seuil *S1* a été fourni *(IdPOS1 - donnée(s) utilisateur*) au serveur par le commerçant utilisant le terminal de paiement électronique *POS1* à surveiller, par exemple via une interface utilisateur de paramétrage du procédé de détection d'un risque de fraude.

Selon un autre exemple, ce seuil *S1* correspond à un seuil *S'1* fourni par le commerçant, affiné ensuite par des données non fournies par le commerçant, comme par exemple des pondérations permettant de tenir compte de critères non maitrisés par le commerçant.

Ainsi, il se peut que le commerçant ait calculé un seuil *S'1* à partir de statistiques effectuées sur l'activité de son commerce, mais sans tenir compte d'aléas particuliers qui permettent de limiter au maximum les fausses alertes. De telles pondérations correspondent par exemple à l'application d'une marge d'erreur, variable selon la valeur du seuil *S'1* fourni par le commerçant.

Par exemple, lorsque le nombre de transactions est compris entre x et *y*, alors la pondération à appliquer correspond à *xy*%, alors que lorsque le nombre de transactions est compris entre *y* et z, la pondération à appliquer correspond à *yz*%.

Ces pondérations peuvent également tenir compte d'un risque plus ou moins grand de tentative de fraude, comme par exemple un risque relativement faible dans un commerce de petite taille où un seul terminal de paiement électronique est utilisé et un risque relativement élevé dans un commerce de grande taille où une pluralité de terminaux de paiement électronique est utilisée.

Ces pondérations peuvent donc également tenir compte du nombre de terminaux utilisés dans un même commerce ou point de vente, afin de prendre en compte des aléas dus au « hasard » d'utilisation d'un terminal de paiement électronique parmi la pluralité de terminaux de paiement électronique. Il s'agit ainsi de « lisser » le nombre de transactions sur la pluralité de terminaux de paiement électronique, tout en tenant compte éventuellement de spécificités propres à chaque terminal de paiement électronique (l'employé en charge de son utilisation, sa situation dans le point de vente ...).

Le serveur 20 peut être en charge d'appliquer ces pondérations et de les mettre à jour régulièrement (par exemple en mutualisant les expériences de mise en oeuvre du procédé de détection selon les différents modes de réalisation de l'invention).

Enfin, le serveur compare la caractéristique de fonctionnement *CF1* avec le seuil prédéterminé *S1* afin de générer ou non une alerte.

Ainsi, selon ce premier mode de réalisation, si le nombre de transactions effectuées sur la période temporelle donnée est inférieur au seuil *S1*, alors une alerte de risque de substitution du terminal est générée, sinon le procédé est réactivé (le nombre de transactions est remis à zéro) pour la prochaine période temporelle de référence, et ainsi de suite.

### 5.2.4 Alerte

Si une alerte est générée, elle peut être exploitée de différentes manières, selon différentes mises en oeuvre de ce mode de réalisation de l'invention. En effet, le mode d'émission de l'alerte est configurable, de manière à s'adapter au mieux aux besoins du commerçant ou de l'utilisateur du terminal de paiement électronique.

Par exemple, un ou plusieurs terminaux de communication du commerçant ont été préalablement enregistrés, dans une base de données du serveur 20, comme destinataires d'une alerte. Il peut s'agir d'un numéro de terminal mobile (smartphone, tablette, PDA ...) vers lequel un SMS ou un email peut être émis. Il peut également s'agir d'un numéro de terminal fixe, sur lequel un appel peut être émis, par un opérateur ou une messagerie vocale.

Le commerçant peut ensuite, dès réception de l'alerte, vérifier si le terminal de paiement électronique authentique a effectivement été remplacé par un terminal de paiement électronique frauduleux, par exemple en vérifiant le numéro de série du terminal de paiement électronique en cours d'utilisation. Si cette vérification n'est pas possible ou n'est pas fiable (car le terminal de paiement électronique frauduleux reproduit le numéro de série du terminal de paiement électronique authentique), alors le commerçant peut faire appel à l'entité gestionnaire du terminal de paiement électronique pour des vérifications plus précises, tout en stoppant l'utilisation du terminal de paiement électronique soupçonné de fraude.

### 5.3. Description d'un deuxième mode de réalisation

On considère, dans un deuxième mode de réalisation, que la caractéristique de fonctionnement du terminal de paiement électronique utilisée pour détecter une éventuelle fraude par substitution de terminal correspond au montant cumulé des transactions effectuées sur une période temporelle donnée.

Les différentes étapes mises en oeuvre dans ce deuxième mode de réalisation sont identiques à celles décrites ci-dessus, en relation avec le premier mode de réalisation, et ne sont pas détaillées ici à nouveau.

Ainsi, la détermination du seuil à appliquer, la détermination de la période temporelle à prendre en considération ainsi que la génération et l'émission d'alerte sont identiques.

Seule la caractéristique de fonctionnement du terminal de paiement électronique utilisée est différente et correspond non plus à un nombre de transactions mais à un montant cumulé des transactions effectuées sur la période temporelle donné. En effet, cette caractéristique de fonctionnement est, selon les cas, plus représentative de l'activité du terminal de paiement électronique que le nombre de transactions.

D'autres caractéristiques de fonctionnement peuvent également être utilisées, selon d'autres modes de réalisation de l'invention, dans la mesure où elles permettent de répondre à la même problématique consistant à observer l'activité « habituelle » d'un terminal de paiement électronique pour détecter un risque de substitution de ce terminal de paiement électronique par un terminal de paiement électronique frauduleux.

De même, une combinaison de plusieurs caractéristiques de fonctionnement peut être utilisée, de façon à optimiser les performances du procédé de détection selon les différents modes de réalisation de l'invention, tout en minimisant les fausses alertes.

### 5.4. Autres caractéristiques et avantages

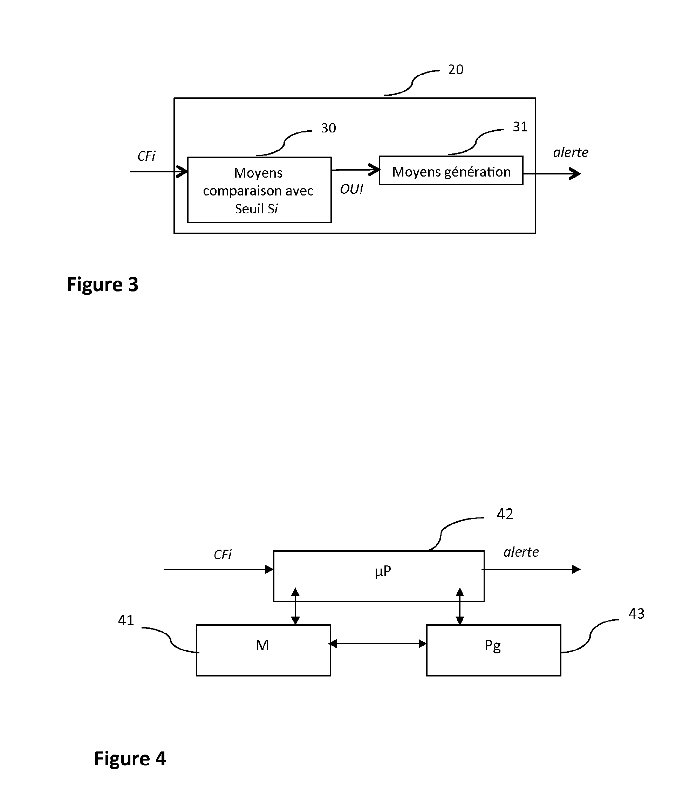

On décrit, en relation avec les figures 3 et 4, un exemple de dispositif de détection d'un risque de substitution d'un terminal de paiement électronique authentique par un terminal de paiement électronique frauduleux, comprenant des moyens d'exécution du procédé décrit préalablement.

Ainsi, comme illustré en figure 3, un tel dispositif 20, par exemple un serveur distant comme décrit ci-dessus en relation avec la figure 2, ou encore une entité d'un point de vente, comprend des moyens (par exemple sous la forme d'un ou plusieurs modules) de comparaison 30 d'une caractéristique de fonctionnement *CFi* d'un terminal de paiement électronique, avec un seuil Si prédéterminé. Le dispositif 20 comprend également des moyens de génération 31 (par exemple sous la forme d'un ou plusieurs modules) d'une alerte, lorsque les moyens de comparaison ont délivré un résultat positif.

On décrit maintenant ce dispositif 20 en relation avec la figure 4.

Par exemple, le dispositif comprend une mémoire 41 constituée d'une mémoire tampon, une unité de traitement 42, équipée par exemple d'un microprocesseur, et pilotée par le programme d'ordinateur 43, mettant en oeuvre un procédé de détection d'un risque de substitution.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée par exemple une caractéristique de fonctionnement *CFi,* associée à un terminal de paiement électronique. Le microprocesseur de l'unité de traitement 42 met en oeuvre les étapes du procédé de détection d'un risque de substitution d'un terminal de paiement électronique authentique par un terminal de paiement électronique frauduleux, selon les instructions du programme d'ordinateur 43, pour générer une alerte.

Pour cela, le dispositif comprend, outre la mémoire tampon 41, des moyens de comparaison 30 d'une caractéristique de fonctionnement *CFi* d'un terminal de paiement électronique authentique avec un seuil Si prédéterminé pour ce terminal de paiement électronique et des moyens de génération 31 d'une alerte (par exemple sous la forme d'un ou plusieurs modules), lorsque les moyens de comparaison ont délivré un résultat positif.

## Revendications

1. Procédé de détection d'un risque de substitution d'un terminal de paiement électronique authentique par un terminal de paiement électronique frauduleux, **caractérisé en ce qu'**il comprend une étape (10) de génération d'une alerte lorsqu'au moins une caractéristique de fonctionnement *(CFi)* associée audit terminal de paiement électronique authentique est inférieure à au moins un seuil prédéterminé (Si).

2. Procédé de détection d'un risque de substitution selon la revendication 1, **caractérisé en ce qu'**il comprend les étapes suivantes :
• obtention d'au moins une information en provenance dudit terminal de paiement électronique authentique permettant de déterminer ladite au moins une caractéristique de fonctionnement *(CFi)* associée audit terminal de paiement électronique authentique ;
• comparaison de ladite au moins une caractéristique de fonctionnement *(CFi)* préalablement déterminée avec ledit seuil prédéterminé (Si).

3. Procédé de détection d'un risque de substitution selon la revendication 1, **caractérisé en ce que** ladite caractéristique de fonctionnement *(CFi)* associée audit terminal de paiement électronique authentique appartient au groupe comprenant :
• un nombre de transactions pendant une période temporelle prédéterminée ;
• un montant cumulé de transactions pendant une période temporelle prédéterminée ;
• une combinaison desdites caractéristiques précédentes.

4. Procédé de détection d'un risque de substitution selon la revendication 1, **caractérisé en ce que** ladite étape de génération d'une alerte tient compte d'au moins une donnée fournie par au moins un utilisateur dudit terminal de paiement électronique authentique.

5. Procédé de détection d'un risque de substitution selon la revendication 4, **caractérisé en ce que** ladite donnée fournie par ledit utilisateur appartient au groupe comprenant :
• au moins une période temporelle ;
• un nombre minimum de transactions effectuées en relation avec au moins une période temporelle ;
• un montant cumulé minimum de transactions effectuées en relation avec au moins une période temporelle ;
• une combinaison desdites données précédentes.

6. Procédé de détection d'un risque de substitution selon la revendication 1, **caractérisé en ce qu'**il comprend en outre une étape d'émission de ladite alerte générée, à destination d'au moins une entité préalablement associée à au moins un utilisateur dudit terminal de paiement électronique authentique.

7. Procédé de détection d'un risque de substitution selon la revendication 1, **caractérisé en ce que** ladite au moins une caractéristique de fonctionnement est associée audit terminal de paiement électronique authentique via un identifiant unique dudit terminal de paiement électronique authentique.

8. Procédé de détection d'un risque de substitution selon la revendication 1, **caractérisé en ce qu'**il est mis en oeuvre par une entité distante.

9. Procédé de détection d'un risque de substitution selon la revendication 1, **caractérisé en ce qu'**il comprend, préalablement à ladite étape de génération de ladite alerte, une étape de comparaison de ladite caractéristique de fonctionnement *(CFi)* associée audit terminal de paiement électronique authentique avec une caractéristique de fonctionnement géographiquement associée au point de vente auquel est rattaché ledit terminal de paiement électronique authentique.

10. Dispositif de détection d'un risque de substitution d'un terminal de paiement électronique authentique par un terminal de paiement électronique frauduleux, **caractérisé en ce qu'**il comprend des moyens (31) de génération d'une alerte lorsqu'au moins une caractéristique de fonctionnement *(CFi)* associée audit terminal de paiement électronique authentique est inférieure à au moins un seuil prédéterminé (Si).

11. Programme d'ordinateur téléchargeable depuis un réseau de communication et/ou stocké sur un support lisible par ordinateur et/ou exécutable par un microprocesseur, comprenant des instructions de code de programme pour l'exécution des étapes du procédé de détection d'un risque de substitution selon l'une quelconque des revendications 1 à 9 lorsque ledit programme est exécuté sur un ordinateur.

12. Support d'enregistrement lisible par un ordinateur sur lequel est enregistré un programme d'ordinateur comprenant un jeu d'instructions exécutables par un ordinateur ou un processeur pour mettre en oeuvre le procédé de détection d'un risque de substitution selon au moins une des revendications 1 à 9.
